# EUROPEAN PATENT APPLICATION

(11) **EP 1 280 059 A2**
(43) Date of publication of application: **29.01.2003**
(21) Application number: 02254829.1
(22) Date of filing: 09.07.2002
(51) Int. Cl.: G06F 9/445

(54) **Automated software driver installation**

(30) Priority: 26.07.2001 US 916754
(71) Applicant: Hewlett-Packard Company, Palo Alto, CA 94304 (US)
(72) Inventor: Barmettler, James W., Corvallis, OR 97330 (US); Currans, Kevin G., Philomath, OR 97370 (US); Smith, Donald X. II, Corvallis, OR 97330 (US)
(74) Representative: Jackson, Richard Eric

(57) **Abstract**

Software driver installation is automated. An automated installation object (14) is run on a system (10). The automated installation object (14) determines which peripheral devices (11,13) are attached to the system (10). The automated installation object (14) determines for which peripheral devices (11,13) found attached to the system (10) the automated installation object (14) is able to perform automated installation. For each of these peripheral devices the automated installation object (14) determines a network location (16,18) that contains a driver installation program for the peripheral device (11,13). The automated installation object (14) downloads the driver installation program from the network location (16,18). The automated installation object (14) runs the driver installation program on the system (10) to install a device driver for the peripheral device (11,13).

## Description

### BACKGROUND OF THE INVENTION

The present invention pertains to software installation in a computing system and pertains particularly to automated driver installation.

Computer peripherals such as digital cameras, printers, compact disk read only memory (CD ROM) drives, digital video drives (DVDs), scanners, and so on, require computer systems to have appropriately installed software drivers in order to allow correct interaction between the peripheral and the computing system.

When peripherals are purchased with a computer system, software drivers are often installed at the factory. However, when peripherals are added to a computer, or an update is needed, users are required to install the software drivers.

For convenience, cost containment and other reasons, users often obtain updated or replacement software drivers through the Internet. For example, driver software is usually shipped with a peripheral, but is sometimes misplaced. The Internet provides a convenient forum for obtaining a replacement for a misplaced software driver as well as an update of a current driver. Users sharing a peripheral device also can turn to the Internet to get a software driver.

Recent versions of the Windows Operating System (e.g., Windows 95, Windows 98, Windows ME, Windows NT, etc.), available from Microsoft Corporation, provide "plug and play" technology that allows peripheral devices to identify which driver is needed when the peripheral devices are attached to a computing system utilizing a Windows Operating system. The plug and play feature of the operating system identifies which driver is necessary, but not necessarily the location of the driver. The plug and play feature cannot locate drivers that are created after the last release of the operating system or drivers that the operating system developers have chosen not to include with the operating system. If the driver is on a floppy disk or on the Internet, it is up to the end user to download the driver to the computing system hard drive and then point the plug and play feature of the operating system to the software driver location.

When obtaining a software driver from an Internet site, a user is generally required to have a significant amount of information.

For example, the user needs to know which operating system (e.g., Windows 3.1, Windows ME, Windows NT, etc.) is currently being used by the computer system on which the software driver is to be installed. Some Internet sites require a user to indicate whether the computer system uses the Macintosh operating system available from Apple Corporation or the Windows Operating system. The user also may need to indicate a model number of the peripheral device being installed. While this should be easy for a user to ascertain, sometimes it is not. Peripheral devices and associated documentation often lack all the information needed to uniquely identify a device. For example, to obtain an appropriate software driver, a user may need to determine whether an HP 1000C printer available from Hewlett Packard Company is a model cse or a model cxi. This information may be hard for a user to determine. It is especially difficult for many users to identify the model of built-in CD ROM and DVD devices.

Additionally, a user is generally required to perform several significant tasks in order to download and install a software driver. Some web sites take a user through five web pages to do an install. In the first web page a user indicates what type of operating system is used (e.g., Macintosh or Windows). In a second web page, the user is requested to specify the particular operating system version (e.g., Windows 3.1, Windows 95, Windows 98, Windows ME, Windows NT, etc.). In a third web page, the user is required to specify the type of device (e.g., printer, scanner, CD ROM). In a fourth web page the user is requested to specify the model of device. In a fifth web page, language and download instructions are given. One mistake on any of these web pages will result in failure of the whole procedure. It is estimated that 50% of all web based installations fail.

### SUMMARY OF THE INVENTION

In accordance with the preferred embodiment of the present invention, software driver installation is automated. An automated installation object is run on a computing system. The automated installation object determines which peripheral devices are attached to the computing system. The automated installation object determines for which peripheral devices found attached to the computing system the automated installation object is able to perform automated installation. For each of these peripheral devices the automated installation object determines a network location that contains a driver installation program for the peripheral device. The automated installation object downloads the driver installation program from the network location. The automated installation object runs the driver installation program on the computing system to install a device driver for the peripheral device.

### BRIEF DESCRIPTION OF THE DRAWINGS

Figure 1 is a block diagram illustrating a plug-in interface running within a browser on a computing system being used to obtain and install a software device driver in accordance with a preferred embodiment of the present invention.
Figure 2 is a flowchart illustrating the process by which a plug-in interface running within a browser on a computing system obtains and installs a software device driver in accordance with a preferred embodiment of the present invention.

### DETAILED DESCRIPTION OF THE PREFERRED EMBODIMENT

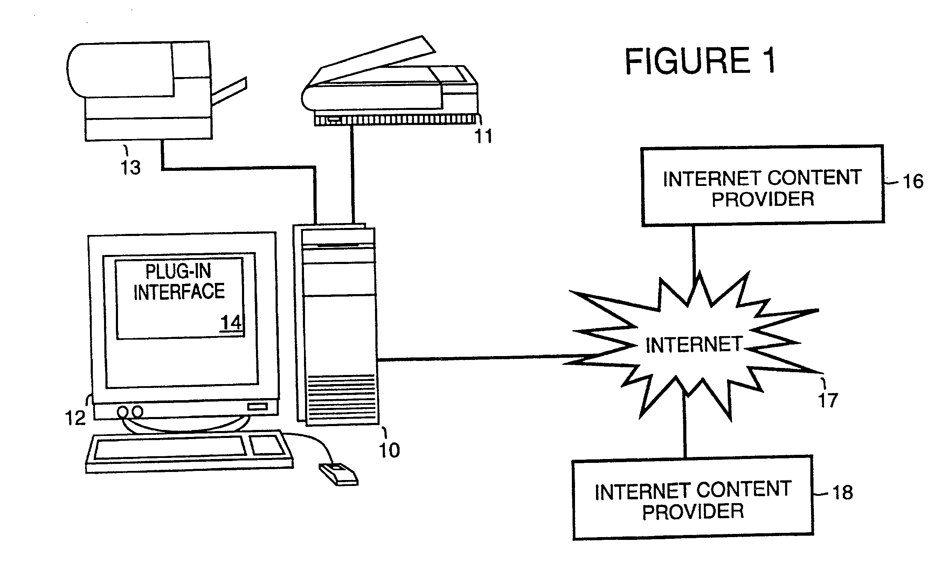

Figure 1 is a block diagram illustrating an interface 14 shown on a display 12 of a computing system 10. A printer 13 and a scanner 11 are representative of the many types of peripherals that are or could be connected to computing system 10.

Interface 14, for example, is a plug-in to a browser that allows convenient and efficient installation of software drivers into computing system 10. Alternatively interface 14 is an Active X control or another type of program that acts as an automated installation object when executing on computing system 10. The software drivers are obtained through the Internet 17 from Internet content providers, illustrated in Figure 1 by an Internet content provider 16 and an Internet content provider 17. Internet 17 is illustrative of any network to which computing system 10 is attached. The principles of the present invention work equally well for any network through which a driver installation program can be obtained.

In one preferred embodiment of the present invention, a user chooses to install or update drivers from a web site. Using information about the user's computer available to the web site, the web site determines whether the driver installation can be automated. If the driver installation cannot be automated, the user is sent to standard driver download pages. If, however, the driver installation can be automated, the user is sent to a web page with an automated installation object. For example, the automated installation object is an embedded web browser plug-in or an ActiveX control. The automated installation object, once downloaded and active on computing system 10 has access to any Application Programmer Interface (API) available on computing system 10 in addition to APIs provided by the web browser in whose process space the automated installation object executes. The automated installation object uses operating system resources to enumerate all devices attached to the computer (physically or through a local network). The download of a device driver is a two-step process. First information about the driver is downloaded and then the driver is conditionally downloaded. Driver information is obtained using the Hypertext Transfer Protocol Secure (HTTPS). The automated installation object gets three pieces of information about each driver: the Universal Resource Locator (URL) of an Internet site that contains the software driver for each device, an MD5 digest of each driver program, and the version of the driver program for each device. HTTPS is used because a software installation is about to occur. With any installation there is a possibility that a virus will be delivered. HTTPS will provide a secure protocol to transfer the driver information.

Using the version information from the previous step, the automated installation object then prompts the user to update/install any devices that need an install/update. If the user OK's the install/update, the automated installation object downloads an installation program for the software driver of the device from the URL obtained in the first step. Once the download is complete, the MD5 digest of the installation program is computed. The MD5 hash algorithm is used to verify that the installation program received is actually the installation program requested. If the calculated MD5 digest matches the downloaded MD5 digest, the installation program is executed. This process can be repeated until all software drivers of computing system 10 available from the web site are installed or upgraded to the latest version.

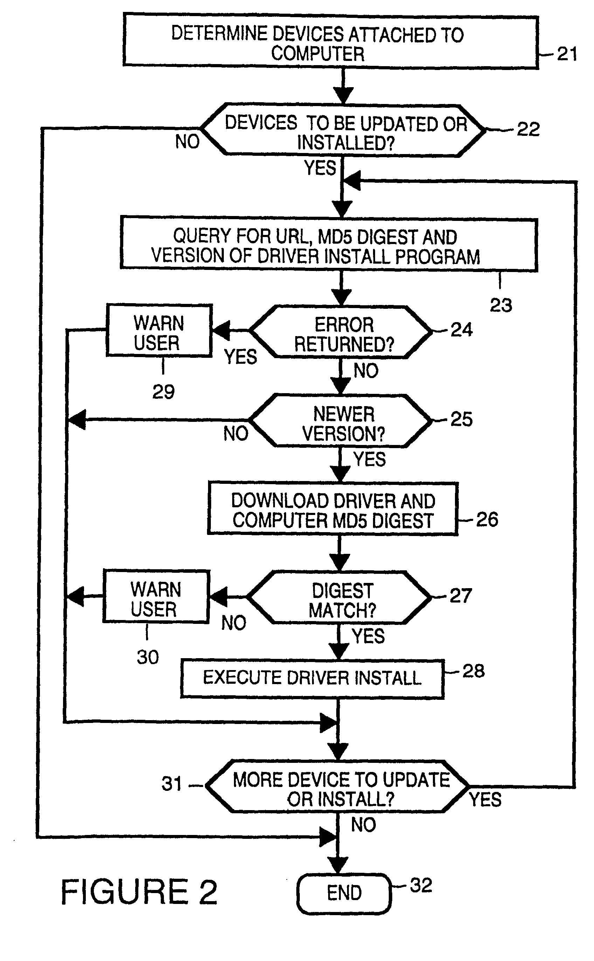

Figure 2 is a flowchart illustrating the process by which the automated installation object obtains and installs a software device driver. In a step 21, the automated installation object identifies all of the devices attached to computing system 10.

In a step 22, a determination is made as to whether there are devices to update or install. If so, in a step 23, the automated installation object uses the Hypertext Transfer Protocol Secure (https) to query through Internet 17 for a Universal Resource Locator (URL) of an Internet site that contains a driver installation program to perform the driver installation or update for a first device. In additional to the driver installation program, a version number for the software driver as well as a MD5 digest for the software driver is obtained from the Internet site.

In a step 24, a check is made to see whether the Internet site returned an error. If so, in a step 29, the user of computing system 10 is warned by a message displayed on display 12. Then, in a step 31, a check is made to see if there are additional devices to install or to update. If not, in a step 32, the process is complete.

If in step 31, it is determined there are additional devices to install or to update, the automated installation object returns to step 23, where the automated installation object uses the Hypertext Transfer Protocol Secure (https) to query through Internet 17 for a URL of an Internet site that contains a driver installation program to perform the driver installation or update for a next device.

If in step 24, the Internet site providing the driver installation program does not return an error, in a step 25 a check is made as to whether the version available through the URL is a newer version than a software driver (if any) for the device that is already installed on computing system 10. If the version available through the URL is not a newer version than a software driver (if any) for the device that is already installed on computing system 10, the automated installation object jumps to step 31 where a check is made to see if there are additional devices to install or to update.

If in step 25 the version available through the URL is a newer version than a software driver (if any) for the device that is already installed on computing system 10, in a step 26, the automated installation object downloads the software driver for the device from the server sponsoring the URL through the Internet 17 to computing system 10. After the download, the MD5 digest for the downloaded software driver is computed.

In a step 27 a check is made to see whether the MD5 digest computed for the downloaded software driver matches the MD5 digest obtained for the device from the Internet site that contains the driver installation program. If the MD5 digest computed for the downloaded software driver does not match the MD5 digest obtained for the device from the Internet site that contains the driver installation program, in a step 30, the user of computing system 10 is warned by a message displayed on display 12. Then, in step 31, a check is made to see if there are additional devices to install or to update.

If in step 27 the MD5 digest computed for the downloaded software driver matches the MD5 digest obtained for the device from the Internet site that contains the driver installation program, in a step 28, the driver installation program is executed and the device is installed. Then, in step 31, a check is made to see if there are additional devices to install or to update. If there are no additional devices to install or to update, in step 32 the process is complete.

The foregoing discussion discloses and describes merely exemplary methods and embodiments of the present invention. As will be understood by those familiar with the art, the invention may be embodied in other specific forms without departing from the spirit or essential characteristics thereof. Accordingly, the disclosure of the present invention is intended to be illustrative, but not limiting, of the scope of the invention, which is set forth in the following claims.

## Claims

1. A computer implemented method for automating software driver installation, the computer implemented method comprising the following step:
(a) running an automated installation object (14) on a system (10), the automated installation object (14) performing the following substeps:
(a.1) determining which peripheral devices (11,13) are attached to the system (10); and,
(a.2) for each peripheral device (11,13) found for which the automated installation object (14) is able to perform automated installation, performing the following substeps by the automated installation object (14):
(a.2.1) determining a network location (16,18) that contains a driver installation program for the peripheral device (11,13),
(a.2.2) downloading the driver installation program from the network location (16,18), and
(a.2.3) running the driver installation program on the system (10) to install a device driver for the peripheral device (11,13).

2. A computer implemented method as in claim 1 wherein substep (a.2.2) comprises the following substep:
downloading a digital signature for the driver installation program and checking the downloaded digital signature against a calculated digital signature calculated from the driver installation program after the driver installation program is downloaded.

3. A computer implemented method as in claim 1 wherein substep (a.2.2) comprises the following substep:
downloading the driver installation program only after confirming the driver installation program will install a newer version of the device driver than currently is installed on the system (10).

4. A computer implemented method as in claim 1 wherein in step (a) the automated installation object (14) is a plug-in to a web browser.

5. A computer implemented method as in claim 1 wherein in step (a) the automated installation object (14) is an ActiveX control.

6. A system (10) comprising:
at least one peripheral device (11,13);
memory that contains an automated installation object (14); and,
a computer which, when running the automated installation object (14), determines which peripheral devices (11,13) are attached to the computer and for each peripheral device (11,13) found for which the automated installation object (14) is able to perform automated installation, the computer determines a network location (16,18) that contains a driver installation program for the peripheral device (11,13), downloads the driver installation program from the network location (16,18), and runs the driver installation program to install a device driver for the peripheral device (11,13).

7. A system (10) as in claim 6 wherein the computer also downloads a digital signature for the driver installation program and checks the downloaded digital signature against a calculated digital signature calculated from the driver installation program after the driver installation program is downloaded.

8. A system (10) as in claim 6 wherein the computer downloads the driver installation program only after confirming the driver installation program will install a newer version of the device driver than currently is installed on the system (10).

9. A system (10) as in claim 6 wherein the automated installation object (14) is a plug-in to a web browser.

10. A system (10) as in claim 6 wherein the automated installation object (14) is an ActiveX control.
